# EUROPEAN PATENT APPLICATION

(11) **EP 4 059 896 A1**
(43) Date of publication of application: **21.09.2022**
(21) Application number: 20886841.4
(22) Date of filing: 13.02.2020
(51) Int. Cl.: C02F 1/00, B01D 24/02

(54) **PERSONAL COLLAPSIBLE DEVICE FOR WATER PURIFICATION**

(30) Priority: 13.11.2019 ES 201931870 U
(71) Applicant: Rodelgo Corrales, Angel, 28053 Madrid (ES); de la Llana Dorr, Olga, 28003 Madrid (ES)
(72) Inventor: GUZMÁN PONS, Israel, 41309 SEVILLA (ES); LLORENTE RODRÍGUEZ, Jaime, 28914 MADRID (ES)
(74) Representative: Lahidalga de Careaga, Jose Luis
(86) International application number: PCT/ES2020/070095
(87) International publication number: WO 2021/094632

(57) **Abstract**

The object of the invention is a personal and foldable device for the purification of water, which is used to filter water by means of the action of a removable filter whose function is to filter the water obtained in any medium, in order to improve the conditions of the same and make it suitable for human consumption.

This device is fundamentally conceived to facilitate its use in any place due to its particular compact and deployable configuration that makes it easily transportable, maintaining the water filtering and purifying performance for which it has been conceived.

The device comprises an upper body or deployable filter, which incorporates the filter and a lower body or carrier, deployable and removable with respect to the upper body, in which this lower body consists of a container itself that is designed to consume the purified water that passes through the filter of the upper body.

## Description

### OBJECT OF THE INVENTION

The present invention describes a device for water purification, foldable and personal, whose function is to purify water to make it fit for human consumption.

It is a product intended to provide the consumer with quality water for consumption, and its foldable nature provides convenience when transporting or storing the device, thus saving space.

It is also a product with an added ecological value because its use prevents the recycling of plastic containers or bottles since it avoids the need to buy this type of containers.

### FIELD OF THE INVENTION

The field of the invention is that of the food industry, as well as the the pharmaceutical industry.

### BACKGROUND OF THE INVENTION.

It is widely known that tap water, especially in certain areas, has a quality or taste that would not always be desired for consumption, which results in the need to purchase bottled mineral waters, in a manner not always desired by the consumer, especially because of the expense involved.

There are different devices designed for direct coupling to the tap supply network, which have filters that allow filtering to some extent chlorine, lime or other substances that ultimately transmit a taste that is not generally liked, however these devices are usually fixed and are intended to be kept attached to the taps.

Among them we can distinguish the European Patent EP0528179, entitled "Filter for liquid" applied for by Robert Bosch GMBH, but it does not mean a remarkable antecedent since it is a double cardboard filter.

The inventor is also aware of the existence of the Spanish utility model ES0249498 for "Improved portable filtering unit", which, although it is an antecedent, solves the problem by means of two single-piece cups joined by their bases and with an interior space where two truncated cone-shaped elements of synthetic material are housed, a realization far removed from the one proposed in this patent.

Moreover, all these devices are not designed for portability, and are therefore of considerable size.

### DESCRIPTION OF THE INVENTION.

The object of the invention is a device for the purification of water, foldable and personal which is used to filter the water by means of the action of a removable filter whose function is to filter the water obtained in any medium, in order to improve the conditions of the same and make it suitable for human consumption.

This device is fundamentally conceived to facilitate its use in any place due to its particular compact and deployable configuration that makes it easily transportable, maintaining the water filtering and purifying performance for which it has been conceived.

The device comprises an upper body or deployable filtering body, which incorporates the filter and a lower body or carrier, deployable and detachable with respect to the upper body, wherein this lower body consists of a container itself that is conceived to consume the purified water that passes through the filter of the upper body.

In the situation in which the lower body is detachable with respect to the upper body, the glass can be coupled by means of the upper body to containers or bottles recycled by the consumer, of the type commonly sold in stores, incorporating for this purpose some means of attachment at the base of the upper body, such as a tubular portion with female thread of standard size intended to introduce the male thread or gland of the container or bottle.

The mission of the upper body, therefore, once deployed, is to receive the water that falls by gravity through the filter inserted in it, a filter that is removable and replaceable, since it has a specific useful life.

The filtered water is then directed through the opening of the tubular portion, either to the lower body, if this is coupled to the upper body, leaving the water ready for consumption using the lower body directly, or if the lower body is disassembled, and there is a bottle coupled to the upper body, the water will be directed to that bottle.

In both cases the water will be purified and ready to be consumed in any of the containers chosen by the consumer for this purpose.

The device also incorporates two lids, preferably provided with thread, one upper and one lower, intended to cover the upper body and the lower body respectively, in the situation in which these are coupled and folded, so that the glass thus constitutes an easily transportable compact assembly, thus solving the above-mentioned problem.

If it is desired to use only the upper body of the device for use with a recycled bottle or container, the lower body is disassembled and then, if the upper body or filter is folded or closed, the sections that make up this body are completely unfolded defining the shape of a glass itself, then the upper lid of the glass is removed, which may be threaded on the upper body, and then the recycled bottle or container is screwed into the thread intended for this purpose at the base of the upper body or filter.

Next, tap water is added through the upper opening of the upper body of the filtering device, taking care that it does not overflow.

Then, the added water will fall by gravity, passing through the filter first, and through the opening of the tubular portion of the lower base of the device until it reaches the recycled container that has been screwed to the female thread of the base of the upper body or filter.

Once the water to be consumed has been filtered, the recycled container or bottle is unscrewed from the device and the purified water can be consumed directly from the bottle.

If you want to use the lower body, which integrates the device, as a container for the consumption of purified water, and which is attached for this purpose, proceed to deploy both bodies, upper and lower, until the sections that make up these bodies are deployed, then unscrew the top cap of the upper body or filter, then, after checking that the lower body is screwed into the tubular portion of the upper body, add tap water through the upper opening of the filter cup.

The purified water then falls by gravity through the threaded joint between the two bodies, and the filtered water is stored in the lower body.

The two bodies are then unscrewed to facilitate access to the purified water stored in the lower body ready for consumption.

On the other hand, it is foreseen that the lids described above, both upper and lower, incorporate microperforations that prevent condensation of the water inside the glass when it is closed and with the upper and lower bodies folded and coupled.

The described device allows therefore to recycle the containers or bottles, avoiding the need to buy bottled water due to the filtering power and quality of the water obtained with this device, as well as the incorporation of the lower body with the function of the glass itself allows its use for direct consumption, without the need of having a bottle.

### DESCRIPTION OF THE DRAWINGS.

To complement the description being made and in order to aid in a better understanding of the characteristics of the invention, two sheets of drawings are attached as an integral part of said description, in which the following has been illustrated for illustrative purposes and without limitation:

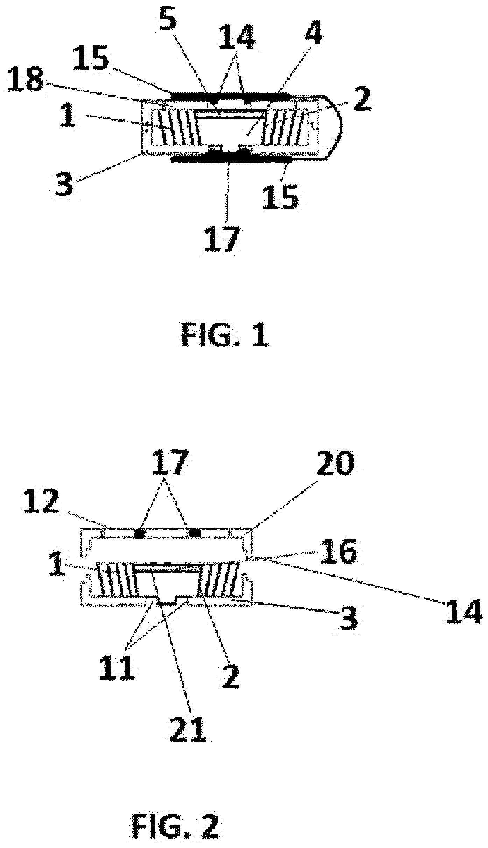

Figure 1. Shows a sectional view of the device in the situation of coupling of the lower body with the upper body, in which both are also folded and the device closed by the upper and lower covers.
Figure 2. Shows a sectional view of the device without covers and with the upper part displaced.

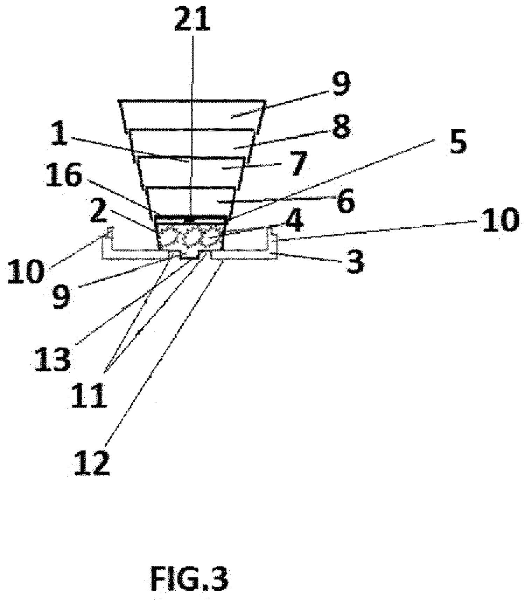

Figure 3. Shows a sectional view of the device without lids, which is ready to store the purified water, introduced through its upper part and stored in the lower body.

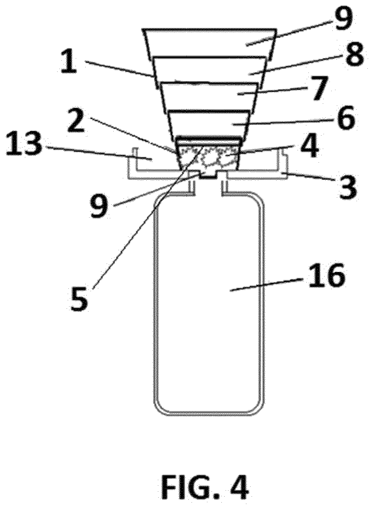

Figure 4. Shows a sectional side view of the device with a bottle attached to the lower part that collects the purified water.

And these figures show the following elements:
(1).- upper body,
(2).- lower body
(3).- fixed base,
(4).- upper flange of the fixed base,
(5).- removable filter,
(6), (7), (8) and (9) - telescopically extendable tubular elements,
(10).- flange flange of the fixed base (3),
(11).- toroidal recess,
(12).- thread,
(13).- water outlet holes,
(14).- recesses of the upper cylindrical part (20),
(15).- through micro-perforations,
(16).- purified water collection container,
(17).- lower lid,
(18).- upper lid),
(19).- thread,
(20).- cylindrical upper part,

### PREFERRED EMBODIMENTS OF THE INVENTION.

The device for the purification of water, foldable and personal, which constitutes the object of this invention is used to filter the water obtained in any medium and by means of the action of a removable filter whose function is to filter the water to improve the conditions of water for human consumption is constituted by the following elements:
The device object of this invention comprises fundamentally an upper body (1) and a lower body (2) detachable with respect to the upper body (1).

The upper body (1) is formed by several tubular pieces (6), (7), (8) and (9) which can be telescopically folded upwards.

The lower body (2) consists of a receptacle (2) open at the bottom and with a removable filter (5) at the top, which has a handle (21) to facilitate its removal and exchange.

The lower body (2) rests on a fixed base (3) consisting of a cylindrical piece of a height approximately half that of the upper body (1) and with an upper flange (4) with a flange (10) and with a toroidal recess (11) with a thread (12) on its lower part and with several holes (13) for the water outlet, which is introduced through the upper part of the body (1) and which, after passing through the filter (5), exits through the holes (13).

This assembly thus constituted, when in folded position, has a cylindrical upper part (20) of similar height to that of the fixed base (3) and symmetrical with it where the perimeter recesses (14) of the same fit perfectly with the perimeter recesses (10) of the fixed base (3), so that once the parts (3) and (12) are coupled, the device is hermetically sealed.

The upper cylindrical part (12) also has a toroidal recess (14) with a thread (19).

In the thread (12) of the toroidal recess (11) can be adapted a container (16) which is intended to collect the purified water that after passing through the filter (5) exits through the holes (13) and is collected in said container.

The device also comprises an upper cover (18) and a lower cover (17), intended to be coupled, on the upper and lower face respectively of the base (3) , and of the part (20) when the device is in the folded position of the upper body (1) and of the lower body (2); by means of threading on the threads (19) and (12) existing in both and which have some through micro-perforations (15) on their upper surface, intended to avoid micro-condensations.

Having sufficiently described the nature of the invention, as well as the manner of carrying it out in practice, it should be noted that the above provisions .

The claims indicated and depicted in the attached drawings are subject to modifications in detail insofar as they do not alter the fundamental principle summarized in the following claims.

## Claims

1. ^{a}.- A personal and foldable device for water purification, characterized for being constituted by the following elements:
.- upper body (1), formed by several tubular pieces (6), (7), (8) and (9) telescopically deployable upwards..
- lower body (2), detachable from the upper body, consisting of a receptacle (2) open at the bottom and with a removable filter (5) at the top, which has a handle (21) for easy removal and exchange.
.- lower fixed base (3), consisting of a cylindrical piece of a height approximately half that of the upper body (1) and with an upper flange (4) with a flange (10) and having in its lower part a toroidal recess (11) with a thread (12) and presenting this recess several holes (13) for the outlet of the purified water.
.- upper cylindrical piece (20), of similar height to that of the fixed base (3) and symmetrical with it where the perimeter recesses (14) of the same fit perfectly with the perimeter recesses (10) of the fixed base (3), so that once coupled the pieces (3) and (12) the device is hermetically sealed.
.- upper and lower covers, (18) and (17), intended to be coupled on the upper and lower face respectively of the base (3) and of the part (20) when the device is in the folded position of the upper body (1) and of the lower body (2); by means of threading on the threads (19) and (12) existing in both and where there are two through micro-perforations (15) intended to avoid micro-condensations.
Purified water collection container (16) whose mouth or gland adapts to the thread (12) of the toroidal recess (11).

2. ^{a}.- A personal and foldable device for water purification, according to the 1st claim and **characterized in that** the upper cylindrical piece (20) symmetrical of the fixed base (3) also has a toroidal recess (14) with a thread (19).
